# EUROPEAN PATENT SPECIFICATION

(11) **EP 2 306 761 B1**
(45) Date of publication and mention of the grant of the patent: **09.07.2014**
(21) Application number: 09290758.3
(22) Date of filing: 02.10.2009
(51) Int. Cl.: H04W 16/10, H04W 16/30

(54) **Resource coordination in cellular networks**
Ressourcenkoordination in Mobilfunknetzen
Coordination de ressources dans des réseaux cellulaires

(43) Date of publication of application: 06.04.2011
(73) Proprietor: Alcatel Lucent, 75007 Paris (FR)
(72) Inventor: Karla, Ingo, Dr., 46514 Schermbeck (DE)
(74) Representative: Wetzel, Emmanuelle

(56) References cited:
- EP-A2- 1 937 012
- EP-A2- 2 086 274
- ALCATEL-LUCENT ET AL: "Support for Semi-Static Inter cell Interference Coordination" 3GPP DRAFT; R1-081874_SEMI-STATIC_INTER_COORD_OR_FREUS E_2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080514, 14 May 2008 (2008-05-14), XP050110242 [retrieved on 2008-05-14]

## Description

### Field of the Invention

The invention relates to the field of telecommunications, and, more specifically, to resource allocation and resource coordination of two or more cells of a cellular network.

### Background

This section introduces aspects that may be helpful in facilitating a better understanding of the invention. Accordingly, the statements of this section are to be read in this light and are not to be understood as admissions about what is in the prior art or what is not in the prior art.

In the 3^{rd} Generation Partnership Project (3GPP) Long Term Evolution (LTE) standard, there exist several mechanisms which are related to resource management for dealing with issues such as e.g. Inter-Cell Interference Coordination (ICIC), Handover Robustness Optimization and Mobility Load Balancing Optimization. In order to reduce the Operation and Maintenance (O&M) effort, it is desired that more and more self-organizing / self-optimizing network (SON) functionality is incorporated into further releases of the LTE standard (see e.g. 3GPP TR 36.902 V1.0.1 for LTE release 9). In an ideal case, such self-organization / self-optimization processes allow a network operator to merely feed the self-organization methods with a number of policy aspects, e.g. the trade-offs between the conflicting coverage, capacity, quality and cost targets, thus minimizing human involvement in network planning and optimization tasks.

However, such a self-organization / self-optimization involves a resource coordination and optimization among many cells, with strongly coupled interactions, also taking resource restrictions into account. It will thus be a very complex task for an algorithm to solve such resource assignment / optimization problems, and a mechanism is needed how this problem (and also other similar self-organizing problems in cellular networks) can be handled.

Although there are proposals for self-organization using static inter-cell interference coordination (ICIC), in such a static approach, changes take place on a long time scale, as is the case for network planning. The static concept therefore does not aim towards reacting on e.g. traffic changes on a shorter time scale. Furthermore, the static ICIC concept provides a fixed amount of resources to each cell, not taking into account that maybe a higher amount of resources may be useful at a certain location in the cell, e.g. in a border region between two neighbouring cells.

There do also exist approaches to coordinate and optimize the resources of particular users on a scheduler level, i.e. on a very short time scale, considering the current radio conditions of each user. This very fast operation is (so far) not realistic in practical applications due to the required very fast inter-cell signalling without basically any delays, due to the high inter-cell signalling load and because of the fact that the computation effort to obtain SON optimizations on a very short time scale is likely to be too high.

A concept for semi-static interference coordination (without SON) was proposed via a request/grant mechanism, e.g. the LTE standardization T-docs "R1-07-3187", "R1-08-1873" and "R1-08-1874". The simple request mechanism described therein shows one (out of several) possibilities how ICIC resources can be triggered to be shifted between cell borders on a short time scale; it is basically a way how resource movement actions can be executed. But this approach is not a self-organizing approach, i.e. the system cannot evaluate which and how many resources are to be used by which cell. This approach also does not have SON functionalities allowing one to decide how the resources shall best be coordinated and optimized. Thus, there exists so far no satisfactory solution for self-organizing (semi-static) resource coordination in cellular networks.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for performing resource coordination of a cell with at least one neighbouring cell of a cellular network, the method comprising: dividing the area of radio coverage of the cell into a plurality of self-organizing network, SON, sub-areas, determining a characteristic value of at least one resource parameter for at least one of the SON sub-areas, and performing at least one SON resource coordination action based on the at least one characteristic value of the at least one SON sub-area of the cell and on at least one characteristic value of at least one resource parameter of at least one SON sub-area of the at least one neighbouring cell.

The inventor proposes to create several SON sub-areas within each cell, the impact of the possible SON actions being described with respect to their effect on the resource parameters of those sub-areas. It should be noted that the term "cell" as used herein refers to an antenna sector of a base station (using a single transceiver path), i.e., the term "cell" corresponds to what is called a "sector" in the US. Thus, each SON sub-area only covers part of the antenna sector / cell. The SON algorithms/actions may then use the characteristic values of the resource parameters in order to (re-)calculate and possibly modify e.g. load balancing parameters for the cells for performing semi-static resource coordination. Such load balancing parameters may include (but are not limited to) handover parameters, ICIC-Resource parameters, Basestation Tx-Power, etc. Typically - but not necessarily - the SON sub-areas are defined in such a way that one particular SON load balancing action directly affects the mobiles in e.g. one particular SON sub-area, while not affecting the mobiles in other SON sub-areas.

Via such a transformation of the SON relevant tasks from the cells to the SON sub-areas, the complex self organizing problem across many cells can be described and handled (e.g. via mathematical algorithms) in a more simplified manner. Thus, the above approach provides a generic concept how complex and strongly coupled self-organizing / optimizing tasks in cellular networks can be simplified.

In one variant, the resource parameter of the SON sub-area is selected from the group consisting of: assigned resources, overall capacity, offered traffic load, and carried traffic load (of a respective SON sub-area). As described above, each cell is -virtually - divided into SON sub-areas and for a small set of resource parameters of each of these SON sub-areas, a respective characterizing (typically averaged) SON sub-area value is calculated. Concretely, the SON sub-area resource parameters may include (but are not limited to): assigned resources, defining the part of the overall resources which are to be treated by the SON actions; a (typically estimated) overall capacity available in a respective SON sub-area (only relative capacity values with respect to other SON sub-areas which are taken into account for the calculation may be sufficient); a (typically averaged) offered traffic load (possibly differentiated to traffic classes / types), and an (average) carried traffic load (possibly differentiated to traffic classes / types) and/or the throughput.

As described above, dividing the cell into the plurality of SON sub-areas allows for semi-static resource coordination. "Semi-static" corresponds to faster than "static" which would basically be network-planning, but not so fast as "dynamic" which would mean to operate on a Transmission Time Interval (TTI) level, considering the current radio conditions of every single user. The "semi static" approach is used for reacting on modifications of the traffic load in a reasonably short time-scale, but not on a scheduler level.

For performing semi-static resource coordination, in a further variant of the method, the step of determining the characteristic value comprises calculating a time average of at least one of the resource parameters over the SON sub-area. The time-scale for averaging the value(s) of the resource parameter(s) may typically - but is not limited to - correspond to the desired time-scale of the semi-static SON operation, e.g. how often / fast the resource coordination actions shall be carried out. Typically, for performing the semi-static resource coordination, at least one of the resource parameters, for example the offered or the carried traffic load, is averaged over all users within a respective SON sub-area over a certain amount of time. However, one skilled in the art will appreciate that other (statistical) measures may be used for characterizing the evolution of the resource parameter over a given time interval.

In a further variant of the method, the SON resource coordination action performed on a respective SON sub-area is selected from the group consisting of: modifying a transmit power of the cell, modifying at least one handover parameter to a neighbouring cell, modifying the amount of frequency resources used, and modifying the amount of resources used for inter-cell interference coordination, i.e. the amount of the available resources of a cell which is not used by that cell and may thus be used by a neighbouring cell to benefit from ICIC.

Based on the knowledge of the characteristic values of the resource parameters of the SON sub-areas, known methods for moving resources between two or more cells may also be applied for moving resources between the SON sub-areas. Some examples of SON coordination actions will be given below (in a non-limiting way):

One example for a SON coordination action is reducing (or modifying) the transmit power of the cell relative to the neighbouring cells in an interference limited situation, thus allowing to shift the border between the two or more affected cells. The transmit power reduction of the cell typically affects the resource parameters in all the SON sub-areas of the cell, also in those sub-areas where possibly no resource shifting actions may be required. Therefore, when performing transmit power modifications as a SON resource coordination action, the effects on all SON sub-areas of the cell should carefully be taken into account.

A further way of performing a SON resource coordination action is by modifying handover parameters, e.g. in such a way that users get a handover to a neighbouring cell at an earlier or at a later time. Thus, users in a small area exactly at the border between one cell and at least one further cell get assigned to one of the two cells; this results in a shifting of some traffic load from one cell to another. Due to physical radio conditions, however, there may be only a small amount of traffic which has the choice to be served by any of the two neighbouring cells, as a base station needs to spend a lot of radio resources (robust coding) to serve a distant user.

When performing a SON resource coordination action by modifying the amount of frequency resources used for ICIC, a part of the available frequency patterns is not used in one or more SON sub-area(s) in order to benefit form ICIC gains in other SON sub-areas. For example, one or more SON sub-areas of a first cell may not use a particular fraction of the available frequency band, with the result that the neighbouring cell benefits form interference-coordination, when this neighbouring cell schedules its mobiles in that border SON sub-area towards the first cell. As a result, the affected SON sub-areas in the first cell may lose some capacity by not (fully) using all of their frequency resources, but those mobiles in the neighbouring cell which are located in the SON sub-area towards the first cell, benefit from the interference-coordination. Thus, the SON sub-area in the neighbouring cell has a higher efficiency and a less robust coding is needed to serve the users located therein with a particular amount of data, which may be considered as an increase of capacity. This ICIC gain in the SON sub-area of one cell needs to be related to the loss by non-used frequency resources in the other cell.

By flexibly assigning the amount of resources used for ICIC between two SON sub-areas of neighbouring cells, even further ICIC capacity gain between those two cells can be achieved. However, as overall resources in the cell are limited, in a SON sub-area of a border region towards another cell, maybe no or reduced ICIC coordination may take place. Therefore, typically, a coordination may be required between several SON sub-areas where the available resources are employed.

By applying the SON coordination actions e.g. of the type described above, the overall cellular network can adapt to e.g. strongly varying traffic and it may be arranged that the traffic load can be served in the best possible way. It should be noted that the SON coordination actions and their resource limitations and coupled interactions can be described with respect to the SON sub-areas only, their impact on the SON sub-areas being described by the characteristic values of the resource parameters.

For the distribution of the SON sub-areas over the cell, the area of radio coverage of the cell has to be divided into the plurality of SON sub-areas based e.g. on a geometrical distance to the at least one neighbouring cell and/or on the signal quality. For example, a SON sub-area towards a particular neighbouring cell could be defined as that area in which that particular neighbouring cell is the strongest interferer and where the neighbour signal strength is within a particular configurable range.

When the SON sub-areas are arranged in the cell based on geometrical considerations, typically, for each neighbouring cell, exactly one SON sub-area is generated, being arranged in a border area to the neighbouring cell. When the signal quality is used for dividing the cell into the plurality of SON sub-areas, measurements of the signal quality by wireless / mobile equipment at different locations of the cell may be taken into account. In particular, for each mobile equipment / user arranged in the cell, a difference between the power of the signal which is provided by the (serving) cell and the signal power of the interference signal of the neighbouring cell having the highest signal power at the location of the user may be taken into account. For determining the neighbouring cell with the interference signal having the highest signal power, it may be necessary to determine the signal power of the signals received from a plurality of neighbouring cells. In this way, a SON sub-area may be defined based on signal quality as a region of the cell where the signal power of the interference signal of the neighbouring cell having highest transmit power is within a particular configurable range. It will be understood that the configurable range (e.g. the upper and lower limiting values of a dB range) may be modified due to one or more SON resource coordination action(s) performed in the cell. In the way described above, users can be attributed to SON sub-areas according to their radio conditions, i.e. in dependence of the respective signal quality and in dependence of the other cells which the user equipment is able to detect. Typically, the user information required for this purpose is a kind of measured information which is already available in the base-station anyhow.

In one variant, the area of radio coverage of the cell is divided into a central SON sub-area and one or more border SON sub-areas, each border SON sub-area being arranged adjacent to exactly one neighbouring cell. In this case, the single central SON sub-area is provided in the middle of the cell (close to and surrounding the base-station), the central SON sub-area being typically not directly affected by the coordination actions of one or more neighbouring cells. In addition, there are several border SON sub-areas in the cell, i.e. one single border SON sub-area towards each neighbouring cell. A neighbouring cell could be defined as a cell to which a neighbour relation exists according to the 3GPP neighbour relation table (NRT) and/or as a cell to which cell handovers are possible. For example, when considering an (idealized) cell layout with a plurality of omni-directional base-stations on a hexagonal grid, each cell has seven SON sub-areas, one centre SON sub-area and six border SON sub-areas, each of the latter being arranged in its border region towards each directly neighbouring cell.

As inter-cell resource coordination requires information exchange, signalling is performed between the cell and the at least one neighbouring cell for exchanging the at least one characteristic value of the at least one resource parameter between the respective SON sub-areas. The semi-static SON algorithms / actions need to have knowledge about the characteristic values of the SON sub-areas in those cells which are taken into account for the SON coordination action (typically only the neighbouring cell(s)). The characteristic values of the resource parameters of the SON sub-areas are typically calculated in the base-station for all of its cell(s) and then exchanged with (or sent to or obtained from) other base-stations using signalling. It will be understood that for performing SON resource coordination actions, in addition to the resource parameter(s), some kind of relative position information of the SON sub-areas in a respective cell may also be exchanged using signalling, the relative position information indicating e.g. towards which neighbouring cell a particular (border) SON sub-area is directed to.

There are several possibilities for exchanging the characteristic values of the resource parameters between the base-stations, an advantageous one being exchanging the at least one characteristic value of the at least one resource parameter as part of a signaling protocol message. In particular, the values may be included, e.g. attached to or contained in an already existing signaling protocol message, for instance in an information exchange signalling protocol message. Using a dedicated signalling protocol message for the transfer of the characteristic value(s) is also possible. Another possibility is attaching the characteristic value(s) as further fields to the Neighbour Relation Table which has to be exchanged between the cells anyhow.

One skilled in the art will appreciate that the characteristic value(s) may be included into optional or private information elements of the signalling protocol messages. It should be noted that such private / optional information elements are already included in the LTE standard, so that the semi-static SON solution can be realized within the present standard, not requiring further modifications which would have to be accepted by the 3GPP standardization.

A further aspect of the invention relates to a base station, comprising: a transceiver unit for generating a cell defining an area of radio coverage of the base station, the base station comprising a dividing unit for dividing the cell into a plurality of self-organizing network, SON, sub-areas, the base station further comprising a determining unit for determining at least one characteristic value of at least one resource parameter of at least one of the plurality of SON sub-areas, and a resource assignment unit for performing one or more SON resource coordination action(s) based on the at least one characteristic value of the at least one SON sub-area of the cell and on at least one characteristic value of at least one resource parameter of at least one SON sub-area of at least one neighbouring cell.

The base station may comprise a single transceiver unit used for generating a single (omni-directional) cell, or the base station may comprise two or more transceiver units for serving two or more cells (e.g. three directional cells, each covering an angle of 120°, also being referred to as sectors). In either case, the (omni-directional or directional) cell is divided into a plurality of SON sub-areas, thus allowing to perform as much distributed functionality as possible. The concept described above is especially suited for distributed self organization solutions. However, it is equally applicable with centralized, O&M based, SON architectures.

In one embodiment, the determining unit of the base station is adapted for determining a characteristic value of a resource parameter of the SON sub-area being selected from the group consisting of: assigned resources, overall capacity, offered traffic load, and carried traffic load. The characteristic value of the above and of other resource parameters may be obtained / calculated in the base station e.g. based on measurement information of mobile stations which are served by the base station / cell, the measurement information being typically available in the base station anyhow, such that usually, no further measurements are needed.

In a further embodiment, the resource assignment unit is adapted for performing a SON resource coordination action being selected from the group consisting of: modifying a transmit power of the cell, modifying at least one handover parameter to a neighbouring cell, modifying the amount of frequency resources used, and modifying the amount of resources used for inter-cell interference coordination. As has already been discussed above, these and other SON resource coordination actions may be performed in the resource assignment unit exclusively based on the SON sub-areas, i.e. the whole SON system can be fully characterized, evaluated and optimized by using the characteristic values of the resource parameters of the SON sub-areas.

The dividing unit may be adapted for dividing the cell into a plurality of SON sub-areas based e.g. on geometrical considerations, in particular with respect to a geometrical distance to at least one neighbouring cell, and/or on a signal quality. The dividing unit is used to implement the concept of SON sub-areas as a kind of mathematical transformation in order to group mobile stations, time periods, and cell-areas together into a plurality of SON sub-areas on which a particular SON action has an impact, thus drastically reducing the mathematical complexity of the SON self-organizing problem. As an example of a division of the cell using geometrical considerations, the cell may be divided into a central SON sub-area and into a plurality of border SON sub-areas, each border SON sub-area being arranged adjacent to exactly one neighbouring cell.

As the resource coordination is typically not performed exclusively between cells being associated with the same base station, signalling may be performed e.g. over an X2 interface for exchanging at least one characteristic value of at least one resource parameter of at least one SON sub-area of the cell with at least one base station of at least one neighbouring cell. It will be understood that signalling is required only for SON sub-areas of cells being served by different base stations, i.e. when one base station is used to serve two or more (directional) cells, the characteristic values of the SON sub-areas of these cells are available in the base station anyhow.

A further aspect of the invention relates to a cellular network comprising a plurality of base stations of the type described above. As the resource coordination has to be performed between the cells of the different base stations, signaling is required and may be performed directly between the base stations. Alternatively or in addition, a core network of the cellular network may be used for transferring at least one characteristic value of at least one resource parameter of at least one SON sub-area from a first to a second base station, for instance using an S1 interface. The core network may be implemented e.g. in the form of a wire-line, e.g. a cable or an optical network.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a cellular network with a plurality of base stations, each base station generating a single omni-directional hexagonal cell, and
- **Fig. 2**: shows an example of information exchange between a first and a second one of the base stations of Fig.1.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

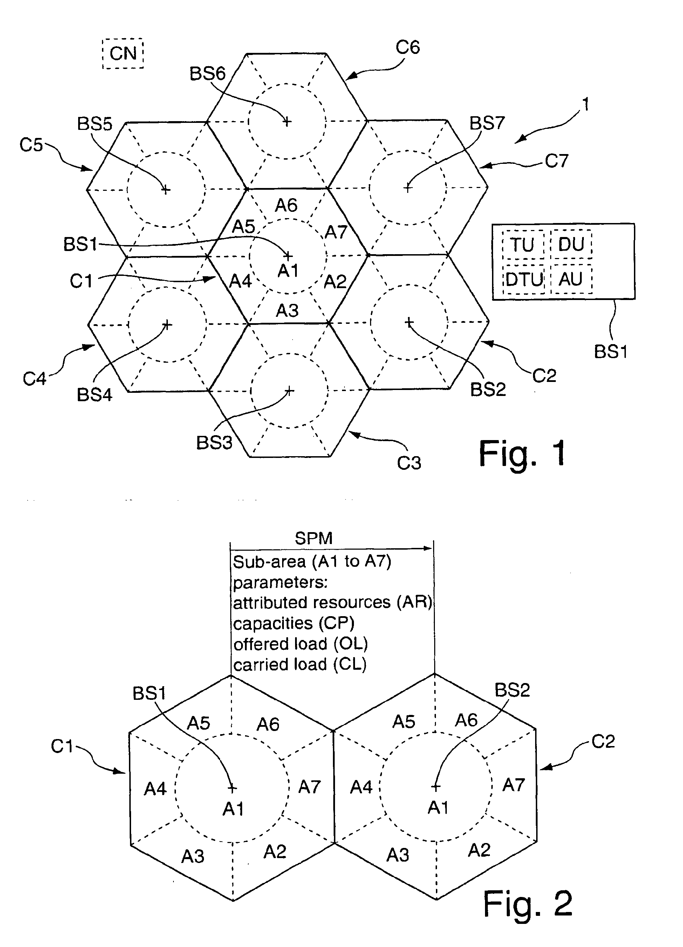

**Fig. 1** shows a cellular network **1** which comprises a plurality of base stations **BS1** to **BS7** having identical construction, each forming the center of a hexagonal cell **C1** to **C7.** The cellular network 1 of the example shown in Fig. 1 is adapted to comply with at least one wireless communication standard, e.g. with the LTE standard. In the following, the general configuration of the base stations BS1 to BS7 will be explained with respect to the first base station BS1 which is shown in detail on the right-hand side of Fig. 1.

The first base station BS1 comprises a transceiver unit **TU** for generating an (idealized) hexagonal area of radio coverage forming an omni-directional cell C1 centered about the first base station BS1. As a pre-requisite for performing resource coordination of the cell C1 with its neighboring cells C2 to C7, the base station BS1 comprises a dividing unit **DU** which is adapted for dividing the cell C1 into a plurality of - virtual - SON sub-areas **A1** to **A7.** In the present example, the dividing unit DU divides the cell C1 into a central SON sub-area A1 and a plurality of six border SON sub-areas A2 to A7, each border SON sub-area A2 to A7 being arranged adjacent to exactly one neighbouring cell C2 to C7.

One skilled in the art will appreciate that alternatively, the base station BS1 may comprise two or more transceiver units for generating two or more cells, e.g. three directional cells each covering an angle of 120°. In this case, the division into sub-areas is performed separately for each of the directional cells. Also, the cell C1 may not necessarily be divided into seven SON sub-areas A1 to A7 in the way shown in Fig. 1, i.e. the cell C1 may be divided into more or less SON sub-areas possibly having a shape which differs from the one represented in Fig. 1. In particular, the shape and location of the SON sub-areas may be based e.g. on a geometrical distance to the neighbouring cells C2 to C7 and/or on a signal quality at different locations within the cell C1.

The base station BS1 also comprises a determining unit **DTU** which is adapted for determining at least one characteristic value of at least one resource parameter of at least one of the plurality of SON sub-areas A1 to A7. The resource parameters may include, but are not limited to: assigned resources **AR,** overall capacity **CP,** offered traffic load **OL,** and carried traffic load **CL** (see **Fig. 2****).** The offered and carried traffic load OL, CL may be further differentiated with respect to different traffic classes. The characteristic value of the resource parameters AR, CP, OL, and/or CL is typically determined by averaging the value of the respective resource parameter AR, CP, OL, CL over a time interval which corresponds to the desired time scale of the (semi-static) SON operation, i.e. how often / fast SON resource coordination actions have to be performed. One skilled in the art will appreciate that there may be further SON sub-area specific resource parameters which may determined and used for the SON (e.g. load balancing resource) actions / calculation(s).

The base station BS1 further comprises a resource assignment unit **AU** for performing one or more SON resource coordination actions on each of the SON sub-areas A1 to A7. The SON resource coordination action may be chosen from (but is not limited to): modifying a transmit power of the cell C1, modifying at least one handover parameter to a neighbouring cell C2 to C7, modifying the amount of frequency resources used, and modifying the amount of resources used for inter-cell interference coordination, i.e. the amount of available (e.g. frequency, time, code) resources which remain unused in one cell and which may be used by a neighbouring cell for allowing the neighbouring cell to benefit from ICIC.

The effect of a resource coordination action performed by the resource assignment unit AU can be described by its impact on the characteristic values of the resource parameters of the SON sub-areas A1 to A7. Thus, the self-organization problem can be transformed from the movement of resources between different cells to the movement of resources between the SON-relevant sub-areas A1 to A7, based on the characteristic values of the resource parameters of the affected SON sub-areas of the cells C1 to C7. Thus, the SON algorithms performed by the resource assignment unit AU can then fully operate on the SON sub-areas A1 to A7 only. Using such a transformation of the SON relevant tasks, the complex self organizing problem across many cells can be described and handled mathematically in a more simplified way.

In particular when using the configuration of the SON sub-areas A1 to A7 shown in Fig. 1, each of the border SON sub-areas A2 to A7 has only one directly adjacent SON sub-area in a neighbouring cell C2 to C7 (the central SON sub-area A1 not being affected by neighbouring cells). In this way, when performing a SON action on one of the SON sub-areas, for instance when reducing the number of frequency patterns used in the seventh SON sub-area A7 (see Fig. 2), this SON action may essentially only affect the fourth SON sub-area A4 of the neighbouring (second) cell C2. In such a way, a ring-movement of resources between different cells can be avoided.

It will be understood, however, that SON coordination actions do exist which affect more than one SON sub-area. For example, the modification of the transmit power of the transceiver unit TU of the base station BS1 affects all of the SON sub-areas A1 to A7 of the cell C1. In such a situation, different SON coordination actions performed the same cell may have to be coordinated by the resource assignment unit AU.

It will be understood that the semi-static SON approach described above requires some form of information exchange between one or more neighbouring cells, e.g. to all the cells C1 to C7, as it is a prerequisite of the SON resource coordination actions to have some knowledge about the characteristic values of the resource parameters of the SON sub-areas of the affected cells. For this purpose, the characteristic values of the resource parameters of the SON sub-areas A1 to A7 of the first cell C1 are calculated in the corresponding base station BS1 and are then exchanged with (or sent to or obtained from) the other base stations BS2 to BS7, possibly together with position information about the relative position of the respective SON sub-area A1 to A7 with respect to the neighbouring cells C2 to C7, i.e. towards which one of the neighbouring cells the SON sub-area A1 to A7 is directed. Note that it may also be possible to determine the characteristic values for only part of the total number of SON sub-areas of a cell and to exchange only the characteristic values of that limited number of SON sub-areas. In other words, depending on the (e.g. load balancing) algorithm and depending on the used load balancing techniques, it may not be mandatory to determine and exchange information from all SON sub-areas within a particular cell; for particular actions it would be enough to exchange only information of a limited set -i.e. one or more- SON sub-areas.

For the exchange of the characteristic values, different possibilities do exist. In the example shown in Fig. 2, the four resource parameters AR, CP, OL, CL described above are transferred directly from the first base station BS1 to the second base station BS2 using an X2 interface. In this case, the characteristic values of the resource parameters AR, CP, OL, CL are transferred as part of a signalling protocol message **SPM** which is already existing in the (LTE) standard, for instance as part of an information exchange signalling protocol message.

Alternatively, the characteristic values may be transferred using a dedicated signalling protocol message, or as an extension (further fields) of a Neighbour Relation Table which is exchanged between the cells anyway. It will be understood that instead of using a direct signalling between the base stations BS1 to BS7, a core network **CN** (cf. Fig. 1) may be used for the transfer of the characteristic values, e.g. using an S1 interface.

In summary, using the concept of SON sub-areas in the way described above, a kind of mathematical transformation can be achieved to group those mobiles, time periods, and cell-areas together into those SON sub-areas on which a particular SON action has an impact. Therefore, when mathematically handling the SON optimization problem by one or more SON algorithms, the whole SON system can be fully characterized, evaluated and optimized by using the characteristic values of the SON sub-areas. In such a way, the complex inter-cell SON problem among many cells can be reduced to the description of SON sub-areas and to the exchange of characteristic values of resource parameters only. In this way, the semi-static inter-cell resource coordination task can now be handled mathematically by self-organizing algorithms in a more simplified way.

It should be appreciated by those skilled in the art that any block diagrams herein represent conceptual views of illustrative character for representing the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for performing resource coordination of a cell (C1) with at least one neighbouring cell (C2 to C7) of a cellular network (1), the method comprising:
dividing the area of radio coverage of the cell (C1) into a plurality of self-organizing network, SON, sub-areas (A1 to A7),
determining a characteristic value of at least one resource parameter (AR, CP, OL, CL) for at least one of the SON sub-areas (A1 to A7), and
performing at least one SON resource coordination action based on the at least one characteristic value of the at least one SON sub-area (A1 to A7) of the cell (C1) and on at least one characteristic value of at least one resource parameter (AR, CP, OL, CL) of at least one SON sub-area (A1 to A7) of the at least one neighbouring cell (C2 to C7).

2. Method according to claim 1, wherein the resource parameter (AR, CP, OL, CL) of the SON sub-area (A1 to A7) is selected from the group consisting of: assigned resources (AR), overall capacity (CP), offered traffic load (OL), and carried traffic load (CL).

3. Method according to claim 1 or 2, wherein determining the characteristic value comprises calculating a time average of at least one of the resource parameters (AR, CP, OL, CL) over the SON sub-area (A1 to A7).

4. Method according to any one of the preceding claims, wherein the SON resource coordination action is selected from the group consisting of:
modifying a transmit power of the cell (C1), modifying at least one handover parameter to a neighbouring cell (C2 to C7), modifying the amount of frequency resources used, and modifying the amount of resources used for inter-cell interference coordination.

5. Method according to any one of the preceding claims, wherein the area of radio coverage of the cell (C1) is divided into the plurality of SON sub-areas (A1 to A7) based on a geometrical distance to the at least one neighbouring cell (C2 to C7) and/or on a signal quality within the cell (C1).

6. Method according to any one of the preceding claims, wherein the area of radio coverage of the cell (C1) is divided into a central SON sub-area (A1) and at least one border SON sub-area (A2 to A7), each border SON sub-area (A2 to A7) being arranged adjacent to exactly one neighbouring cell (C2 to C7).

7. Method according to any one of the preceding claims, wherein signalling is performed between the cell (C1) and the at least one neighbouring cell (C2 to C7) for transferring the at least one characteristic value of the at least one resource parameter (AR, CP, OL, CL) from the cell (C1) to the at least one neighbouring cell (C2 to C7).

8. Method according to claim 7, wherein the at least one characteristic value of the at least one resource parameter (AR, CP, OL, CL) is transferred from the cell (C1) to the at least one neighbouring cell (C2 to C7) as part of a signaling protocol message (SPM).

9. Base station (BS1), comprising:
a transceiver unit (TU) for generating a cell (C1) defining an area of radio coverage of the base station (BS1),
a dividing unit (DU) for dividing the cell (C1) into a plurality of self-organizing network, SON, sub-areas (A1 to A7),
a determining unit (DTU) for determining at least one characteristic value of at least one resource parameter (AR, CP, OL, CL) of at least one of the plurality of SON sub-areas (A1 to A7), and
a resource assignment unit (AU) for performing a SON resource coordination action based on the at least one characteristic value of the at least one SON sub-area (A1 to A7) of the cell (C1) and on at least one characteristic value of at least one resource parameter (AR, CP, OL, CL) of at least one SON sub-area (A1 to A7) of at least one neighbouring cell (C2 to C7).

10. Base station according to claim 9, wherein the determining unit (DTU) is adapted for determining a characteristic value of a resource parameter (AR, CP, OL, CL) of the SON sub-area (A1 to A7) being selected from the group consisting of: assigned resources (AR), overall capacity (CP), offered traffic load (OL), and carried traffic load (CL).

11. Base station according to claim 9 or 10, wherein the resource assignment unit (AU) is adapted for performing a SON resource coordination action being selected from the group consisting of:
modifying a transmit power of the cell (C1), modifying at least one handover parameter to a neighbouring cell (C2 to C7), modifying the amount of frequency resources used, and modifying the amount of resources used for inter-cell interference coordination.

12. Base station according to any one of claims 9 to 11, wherein the dividing unit (DU) is adapted for dividing the cell (C1) into a plurality of SON sub-areas (A1 to A7) based on a geometrical distance to the at least one neighbouring cell (C2 to C7) and/or on a signal quality within the cell (C1).

13. Base station according to any one of claims 9 to 12, wherein the dividing unit (DU) is adapted for dividing the cell (C1) into a central SON sub-area (A1) and a plurality of border SON sub-areas (A2 to A7), each border SON sub-area (A2 to A7) being arranged adjacent to exactly one neighbouring cell (C2 to C7).

14. Base station according to any one of claims 9 to 13, being adapted for transferring at least one characteristic value of at least one resource parameter (AR, CP, OL, CL) of at least one SON sub-area (A1 to A7) of the cell (C1) to at least one base station (BS2 to) of at least one neighbouring cell (C2 to C7) using signalling, preferably over an X2 interface.

15. Cellular network (1) comprising a plurality of base stations (BS1 to BS7) according to any one of claims 9 to 14, the cellular network (1) preferably further comprising a core network (CN) being adapted for transferring at least one characteristic value of at least one resource parameter (AR, CP, OL, CL) of at least one SON sub-area (A1 to A7) from a first to a second one of the base stations (BS1 to BS7).

## Patentansprüche

1. Verfahren zur Durchführung der Ressourcenkoordination einer Zelle (C1) mit mindestens einer benachbarten Zelle (C2 bis C7) eines Mobilfunknetzwerks (1), wobei das Verfahren umfasst:
Unterteilen des Funkversorgungsbereichs der Zelle (C1) in eine Vielzahl von Teilbereichen (A1 bis A7) eines selbstorganisierenden Netzwerks, SON, Ermitteln eines Kennwertes mindestens eines Ressourcenparameters (AR, CP, OL, CL) für mindestens einen der SON-Teilbereiche (A1 bis A7), und
Durchrühren mindestens einer SON-Ressourcenkoordinationsaktion auf der Basis des mindestens einen Kennwertes des mindestens einen SON-Teilbereichs (A1 bis A7) der Zelle (C1) und des mindestens einen Kennwertes mindestens eines Ressourcenparameters (AR, CP, OL, CL) mindestens eines SON-Teilbereichs (A1 bis A7) der mindestens einen benachbarten Zelle (C2 bis C7).

2. Verfahren nach Anspruch 1, wobei der Ressourcenparameter (AR, CP, OL, CL) des SON-Teilbereichs (A1 bis A7) aus der Gruppe bestehend aus: zugewiesene Ressourcen (AR), Gesamtkapazität (CP), angebotene Verkehrslast (OL) und transportierte Verkehrslast (CL) ausgewählt wird.

3. Verfahren nach Anspruch 1 oder 2, wobei das Ermitteln des Kennwertes das Berechnen eines zeitlichen Mittelwertes mindestens eines der Ressourcenparameter (AR, CP, OL, CL) über den SON-Teilbereich (A1 bis A7) hinweg umfasst.

4. Verfahren nach einem beliebigen der vorstehenden Ansprüche, wobei die SON-Ressourcenkoordinationsaktion aus der Gruppe bestehend aus: Ändern einer Sendeleistung der Zelle (C1), Ändern mindestens eines Parameters für den Handover an eine benachbarte Zelle (C2 bis C7), Ändern der Menge der genutzten Frequenzressourcen, und Ändern der Menge der für die Interzell-Interferenzkoordination genutzten Resourcen, ausgewählt wird.

5. Verfahren nach einem beliebigen der vorstehenden Ansprüche, wobei die Unterteilung des Funkversorgungsbereichs der Zelle (C1) in die Vielzahl von SON-Teilbereichen (A1 bis A7) auf der Basis einer geometrischen Entfernung zu der mindestens einen benachbarten Zelle (C2 bis C7) und/oder auf der Basis einer Signalqualität innerhalb der Zelle (C1) erfolgt.

6. Verfahren nach einem beliebigen der vorstehenden Absprüche, wobei der Funkversorgungsbereich der Zelle (C1) in einen zentralen SON-Teilbereich (A1) und mindestens einen SON-Rand-Teilbereich (A2 bis A7) unterteilt wird, wobei jeder SON-Rand-Teilbereich (A2 bis A7) an genau eine benachbarte Zelle (C2 bis C7) angrenzt.

7. Verfahren nach einem beliebigen der vorstehenden Ansprüche, wobei die Signalisierung zwischen der Zelle (C1) und der mindestens einen benachbarten Zelle (C2 bis C7) für die Übertragung des mindestens einen Kennwertes des mindestens einen Ressourcenparameters (AR, CP, OL, CL) von der Zelle (C1) an die mindestens eine benachbarte Zelle (C2 bis C7) durchgeführt wird.

8. Verfahren nach Anspruch 7, wobei der mindestens eine Kennwert des mindestens einen Ressourcenparameters (AR, CP, OL, CL) als Teil einer Signalisierungsprotokollnachricht (SPM) von der Zelle (C1) an die mindestens eine benachbarte Zelle (C2 bis C7) übertragen wird.

9. Basisstation (BS1), umfassend:
Eine Transceiver-Einheit (TU) für die Erzeugung einer Zelle (C1), welche einen Funkversorgungsbereich der Basisstation (BS1) definiert,
eine Unterteilungseinheit (DU) für die Unterteilung der Zelle (C1) in eine Vielzahl von Teilbereichen (A1 bis A7) eines selbstorganisierenden Netzwerks, SON,
eine Ermittlungseinheit (DTU) für die Ermittlung mindestens eines Kennwertes mindestens eines Ressourcenparameters (AR, CP, OL, CL) mindestens eines der Vielzahl von SON-Teilbereichen (A1 bis A7), und
eine Ressourcenzuweisungseinheit (AU) für die Durchführung einer SON-Ressourcenkoordinationsaktion auf der Basis des mindestens einen Kennwertes des mindestens einen SON-Teilbereichs (A1 bis 17) der Zelle (C1) und des mindestens einen Kennwertes mindestens eines Ressourcenparameters (AR, CP, OL, CL) mindestens eines SON-Teilbereichs (A1 bis 17) mindestens einer benachbarten Zelle (C2 bis C7).

10. Basisstation nach Anspruch 9, wobei die Ermittlungseinheit (DTU) für die Ermittlung eines Kennwertes eines Ressourcenparameters (AR, CP, OL, CL) des SON-Teilbereichs (A1 bis A7), ausgewählt aus der Gruppe bestehend aus: zugewiesene Ressourcen (AR), Gesamtkapazität (CP), angebotene Verkehrslast (OL) und transportierte Verkehrslast (CL), ausgelegt ist.

11. Basisstation nach Anspruch 9 oder 10, wobei die Ressourcenzuweisungseinheit (AU) für die Durchführung einer SON-Ressourcenkoordinationsaktion, ausgewählt aus der Gruppe bestehend aus: Ändern einer Sendeleistung der Zelle (C1), Ändern mindestens eines Parameters für den Handover an eine benachbarte Zelle (C2 bis C7), Ändern der Menge der genutzten Frequenzressourcen, und Ändern der Menge der für die Interzellinterferenzkoordination genutzten Ressourcen, ausgelegt ist.

12. Basisstation nach einem beliebigen der Ansprüche 9 bis 11, wobei die Unterteilungseinheit (DU) für die Unterteilung der Zelle (C1) in eine Vielzahl von Teilbereichen (A1 bis A7) eines selbstorganisierenden Netzwerks, SON, auf der Basis einer geometrischen Entfernung zu der mindestens einen benachbarten Zelle (C2 bis C7) und/oder auf der Basis einer Signalqualität innerhalb der Zelle (C1) ausgelegt ist.

13. Basisstation nach einem beliebigen der Ansprüche 9 bis 12, wobei die Unterteilungseinheit (DU) für die Unterteilung der Zelle (C1) in einen zentralen SON-Teilbereich (A1) und eine Vielzahl von SON-Rand-Teilbereichen (A2 bis A7) ausgelegt ist, wobei jeder SON-Rand-Teilbereich (A2 bis A7) genau an eine benachbarte Zelle (C2 bis C7) angrenzt.

14. Basisstation nach einem beliebigen der Ansprüche 9 bis 13, ausgelegt für die Übertragung mindestens eines Kennwertes mindestens eines Ressourcenparameters (AR, CP, OL, CL) mindestens eines SON-Teilbereichs (A1 bis A7) der Zelle (C1) an mindestens eine Basisstation (BS2 bis BS7) mindestens einer benachbarten Zelle (C2 bis C7) unter Verwindung von Signalisierung, vorzugsweise über eine X2-Schnittstelle.

15. Mobilfunknetzwerk (1) mit einer Vielzahl von Basisstationen BS1 bis BS7) gemäß einem beliebigen der Ansprüche 9 bis 14, wobei das Mobilfunknetzwerk (1) vorzugsweise weiterhin ein Kernnetzwerk (CN) umfasst, welches für die Übertragung mindestens eines Kennwertes mindestens eines Ressourcenparameters (AR, CP, OL, CL) mindestens eines SON-Teilbereichs (A1 bis A7) von einer ersten an eine zweite der Basisstationen (BS1 bis BS7) ausgelegt ist.

## Revendications

1. Procédé pour effectuer une coordination de ressources d'une cellule (C1) avec au moins une cellule voisine (C2 à C7) d'un réseau cellulaire (1), le procédé comprenant les étapes suivantes :
diviser la zone de couverture radio de la cellule (C1) en une pluralité de sous-zones de réseau auto-organisé, SON (A1 à A7),
déterminer une valeur caractéristique d'au moins un paramètre de ressources (AR, CP, OL, CL) pour au moins une des sous-zones SON (A1 à A7), et effectuer au moins une action de coordination de ressources SON sur la base de l'au moins une valeur caractéristique de l'au moins une sous-zone SON (A1 à A7) de la cellule (C1) et d'au moins une valeur caractéristique d'au moins un paramètre de ressources (AR, CP, OL, CL) d'au moins une sous-zone SON (A1 à A7) de l'au moins une cellule voisine (C2 à C7).

2. Procédé selon la revendication 1, dans lequel le paramètre de ressources (AR, CP, OL, CL) de la sous-zone SON (A1 à A7) est sélectionné dans le groupe constitué :
des ressources attribuées (AR), de la capacité globale (CP), du volume de trafic offert (OL) et du volume de trafic écoulé (CL).

3. Procédé selon la revendication 1 ou 2, dans lequel la détermination de la valeur caractéristique comprend le calcul d'une moyenne temporelle d'au moins un des paramètres de ressources (AR, CP, OL, CL) sur la sous-zone SON (A1 à A7).

4. Procédé selon l'une quelconque des revendications précédentes, dans lequel l'action de coordination de ressources SON est sélectionnée dans le groupe constitué : de la modification d'une puissance d'émission de la cellule (C1), de la modification d'au moins un paramètre de transfert vers une cellule voisine (C2 à C7), de la modification de la quantité de ressources de fréquence utilisées, et de la modification de la quantité de ressources utilisées pour la coordination d'interférence intercellulaire.

5. Procédé selon l'une quelconque des revendications précédentes, dans lequel la zone de couverture radio de la cellule (C1) est divisée en la pluralité de sous-zones SON (A1 à A7) sur la base d'une distance géométrique vers l'au moins une cellule voisine (C2 à C7) et/ou d'une qualité de signal à l'intérieur de la cellule (C1).

6. Procédé selon l'une quelconque des revendications précédentes, dans lequel la zone de couverture radio de la cellule (C1) est divisée en une sous-zone SON centrale (A1) et au moins une sous-zone SON de bordure (A2 à A7), chaque sous-zone SON de bordure (A2 à A7) étant disposée juste à côté d'une cellule voisine (C2 à C7).

7. Procédé selon l'une quelconque des revendications précédentes, dans lequel la signalisation est effectuée entre la cellule (C1) et l'au moins une cellule voisine (C2 à C7) pour transférer l'au moins une valeur caractéristique de l'au moins un paramètre de ressources (AR, CP, OL, CL) à partir de la cellule (C1) vers l'au moins une cellule voisine (C2 à C7).

8. Procédé selon la revendication 7, dans lequel l'au moins une valeur caractéristique de l'au moins un paramètre de ressources (AR, CP, OL, CL) est transférée à partir de la cellule (C1) vers l'au moins une cellule voisine (C2 à C7) comme partie d'un message de protocole de signalisation (SPM).

9. Station de base (BS1), comprenant :
une unité d'émission-réception (TU) pour générer une cellule (C1) définissant une zone de couverture radio de la station de base (BS1),
une unité de division (DU) pour diviser la cellule (C1) en une pluralité de sous-zones de réseau auto-organisé, SON (A1 à A7),
une unité de détermination (DTU) pour déterminer au moins une valeur caractéristique d'au moins un paramètre de ressources (AR, CP, OL, CL) d'au moins une parmi la pluralité de sous-zones SON (A1 à A7), et
une unité d'attribution de ressources (AU) pour effectuer une action de coordination de ressources SON sur la base de l'au moins une valeur caractéristique de l'au moins une sous-zone SON (A1 à A7) de la cellule (C1) et d'au moins une valeur caractéristique d'au moins un paramètre de ressources (AR, CP, OL, CL) d'au moins une sous-zone SON (A1 à A7) d'au moins une cellule voisine (C2 à C7).

10. Station de base selon la revendication 9, dans laquelle l'unité de détermination (DTU) est adaptée pour déterminer une valeur caractéristique d'un paramètre de ressources (AR, CP, OL, CL) de la sous-zone SON (A1 à A7) sélectionnée dans le groupe constitué : des ressources attribuées (AR), de la capacité globale (CP), du volume de trafic offert (OL) et du volume de trafic écoulé (CL).

11. Station de base selon la revendication 9 ou 10, dans laquelle l'unité d'attribution de ressources (AU) est adaptée pour effectuer une action de coordination de ressources SON sélectionnée dans le groupe constitué : de la modification d'une puissance d'émission de la cellule (C1), de la modification d'au moins un paramètre de transfert vers une cellule voisine (C2 à C7), de la modification de la quantité de ressources de fréquence utilisées, et de la modification de la quantité de ressources utilisées pour la coordination d'interférence intercellulaire.

12. Station de base selon l'une quelconque des revendications 9 à 11, dans laquelle l'unité de division (DU) est adaptée pour diviser la cellule (C1) en une pluralité de sous-zones SON (A1 à A7) sur la base d'une distance géométrique vers l'au moins une cellule voisine (C2 à C7) et/ou d'une qualité de signal à l'intérieur de la cellule (C1).

13. Station de base selon l'une quelconque des revendications 9 à 12, dans laquelle l'unité de division (DU) est adaptée pour diviser la cellule (C1) en une sous-zone SON centrale (A1) et une pluralité de sous-zones SON de bordure (A2 à A7), chaque sous-zone SON de bordure (A2 à A7) étant disposée juste à côté d'une cellule voisine (C2 à C7).

14. Station de base selon l'une quelconque des revendications 9 à 13, étant adaptée pour transférer au moins une valeur caractéristique d'au moins un paramètre de ressources (AR, CP, OL, CL) d'au moins une sous-zone SON (A1 à A7) de la cellule (C1) vers au moins une station de base (BS2 à BS7) d'au moins une cellule voisine (C2 à C7) au moyen de la signalisation, de préférence sur une interface X2.

15. Réseau cellulaire (1) comprenant une pluralité de stations de base (BS1 à BS7) selon l'une quelconque des revendications 9 à 14, le réseau cellulaire (1) comprenant de préférence en outre un réseau central (CN) adapté pour transférer au moins une valeur caractéristique d'au moins un paramètre de ressources (AR, CP, OL, CL) d'au moins une sous-zone SON (A1 à A7) entre une première et une deuxième des stations de base (BS1 à BS7).
